**Europäisches Patentamt**

**European Patent Office**

**Office européen des brevets**

(11) Publication number: **0 211 329**
**B1**

(12) **EUROPEAN PATENT SPECIFICATION**

(45) Date of publication of patent specification: **10.01.90**  (51) Int. Cl.⁵: **B 23 Q 3/154**

(21) Application number: **86110121.0**

(22) Date of filing: **23.07.86**

(54) Magnetic work-holding apparatus.

| | |
|---|---|
| (30) Priority: **06.08.85 IT 2274585 u** | (73) Proprietor: **TECNOMAGNETE S.p.A.**<br>**Via Dei Cignoli no. 9**<br>**I-20151 Milano (IT)** |
| (43) Date of publication of application:<br>**25.02.87 Bulletin 87/09** | |
| | (72) Inventor: **Cardone, Michele**<br>**Via Mantegna No. 29**<br>**I-20090 Trezzano Sul Naviglio Milano (IT)** |
| (45) Publication of the grant of the patent:<br>**10.01.90 Bulletin 90/02** | Inventor: **Grandini, Angelo**<br>**Via Bembo No. 16**<br>**I-20090 Trezzano Sul Naviglio Milano (IT)** |
| (84) Designated Contracting States:<br>**DE FR GB NL** | Inventor: **Zaramella, Bruno**<br>**Via P. Sarpi No. 3**<br>**I-20090 Trezzano Sul Naviglio Milano (IT)** |
| (56) References cited:<br>**DE-A-3 201 826**<br>**GB-A-2 037 083**<br>**US-A- 675 323**<br>**US-A-3 340 442**<br>**US-A-3 978 441**<br>**US-A-4 014 289**<br>**US-A-4 141 547** | (74) Representative: **Petruzzelli, Antonio**<br>**Via E. De Amicis No. 25**<br>**I-20123 Milano (IT)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention refers to a magnetic gripping apparatus, of the type comprising a plurality of reversible magnet cores disposed symmetrically in parallel rows, which can be magnetized and demagnetized by making them carry out progressively variable hysteresis loops.

A previous EP—A—0109011 of the same applicant discloses a work-holding magnetic apparatus having permanent magnets and comprising a plurality of pole pieces symmetrically arranged in parallel rows so as to reproduce a quadrangular pole disposition. Each pole piece is fed by a reversible permanent magnet axially aligned with the pole piece and disposed between the latter and a ferromagnetic base plate, and by non-reversible permanent magnets in contact with the lateral faces of the same pole piece. This magnetic arrangement of the pole, which alternate poles having different polarities, and the combination with magnetic materials having properties which differ from one another, prove to be extremely advantageous in that they make it possible to obtain a high concentration of flux on the anchoring or work-holding surface, and a symmetrical distribution of the poles which can be repeated virtually without limit.

However, in such apparatus, the alternated distribution of the poles cannot be changed and depends strictly upon the disposition of the magnet cores; moreover, the distance between adjacent poles depends upon the length of the non-reversible magnets positioned between adjoining pole pieces, consequently, such distance cannot be reduced due to the fact that it could prevent the apparatus from working properly.

A magnetic holding device is also known, from GB—A—758183, comprising an inner mild steel plate secured to a base plate, provided with a magnet member of high retentivity material surrounded by an electric coil, and two side pole pieces defining a magnetizable and demagnetizable three-pole unit. The work-gripping surface is completed by a plurality of bars or strips of magnetic material, arranged alternately with bars or strips of non-magnetic material extending parallel to the pole pieces.

In certain applications on machine tools which have to machine small-sized workpieces or workpieces with variable thicknesses, it would be advantageous to have a magnetic gripping apparatus which, in addition to the advantages or features of the previous apparatuses, would also be capable of varying both the disposition and distribution of the polarities of poles on the work-holding surface, and the depth of the generated magnetic field, at the same time enabling the poles to be brought closer.

An object of present invention, therefore, is to provide a magnetic gripping apparatus of the type comprising reversible magnet cores, activatable and deactivatable by magnetization and by complete demagnetization, which can be activated according to pre-established pole dispositions varying the distribution of polarities on the work gripping surface, enabling at the same time to bring the pole closer.

A further object of present invention is to provide a magnetic gripping apparatus of the type referred to, which is sufficiently flexible to adapt to a variety of working conditions and, at the same time, is still able to ensure satisfactory gripping forces.

By relatively reducing the distances between the rows of adjacent pole pieces, it is possible to obtain a greater density or number of poles per unit of gripping or anchoring surface and, therefore, a high gripping force even with a relatively low flux density. Moreover, the use of a single permanent magnet core, with the same cross-sectional area as the pole piece, which can be deactivated by complete demagnetization, offers numerous additional advantages, with respect to the previous apparatus, such as a reduction in manufacturing costs due to the use of less magnetic material, a wider tolerance in calculating and performing the magnetic circuit, and of the activating and deactivating electric coils, by totally eliminating the long and delicate work of setting the apparatus, which was previously necessary in order to compensate for any differences in flux between the various magnets, which would have prevented the complete deactivation of the apparatus.

Lastly, the electric coils generating the magnetic field for magnetizing and demagnetizing each single magnet core, can be divided into two groups, and suitably connected by a changeover switch to a power supply in order to obtain two different pole configurations or dispositions, according to the working requirements of the apparatus.

The apparatus according to this invention is an improvement of the magnetic gripping apparatus described in EP—A—0109011 which forms the basis of the pre-characterizing portion of claim 1. The apparatus will be described in greater detail hereunder, with reference to the example of the accompanying drawings, in which:

Fig. 1 shows a top view of the apparatus, illustrating a first pole distribution;

Fig. 2 shows a cross-sectional view along the line 2—2 of Fig. 1;

Fig. 3 shows a view similar to that of Fig. 1, illustrating a further pole distribution;

Fig. 4 shows a graphic representation of the characteristic demagnetizing curve of a magnetic material used in the apparatus according to this invention;

Fig. 5 shows the electrical circuit of the coils for changing the pole disposition from Fig. 1 to Fig. 3.

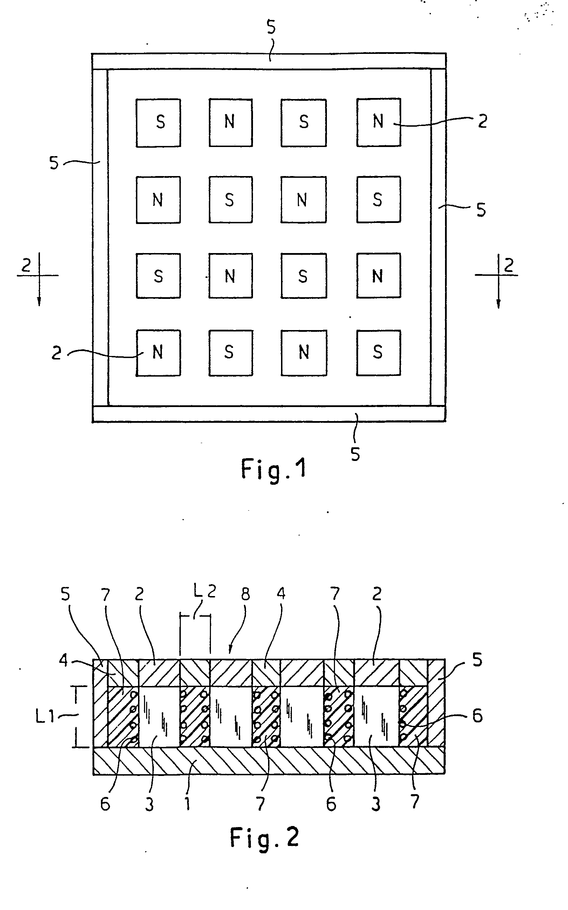

As shown in Figs. 1 and 2, the magnetic apparatus substantially comprises a base member 1, made of ferromagnetic material, in the form of a bed plate having a main plane to which a plurality of pole pieces are mechanically fastened, for example, by means of screws (not shown) or other suitable means; the pole pieces 2 are of ferromagnetic material, having a square, circular, triangular or other suitable shape, and present a symmetrical disposition, in parallel rows, as shown. Each single pole piece 2 is fed by a reversible magnet core 3 of high retentivity material, having the same shape as the pole piece 2, in which each core 3 is disposed between a respective pole piece 2 and the base plate 1. Epoxy resin or non-magnetic spacers 4, for example, made of brass, can be disposed between adjacent pole pieces 2 and between the latter and the side walls 5 of the apparatus, creating gaps of equal width.

Each magnet core 3 can be cyclically magnetized and demagnetized, by the magnetic field generated by a respective electric coil 6 which surrounds the reversible magnet core 3 and is embedded in an epoxy resin casting 7 which fills the gaps or hollow spaces inside the apparatus and on the workpiece-holding surface 8, defined by the upper faces or surfaces of the pole pieces 2.

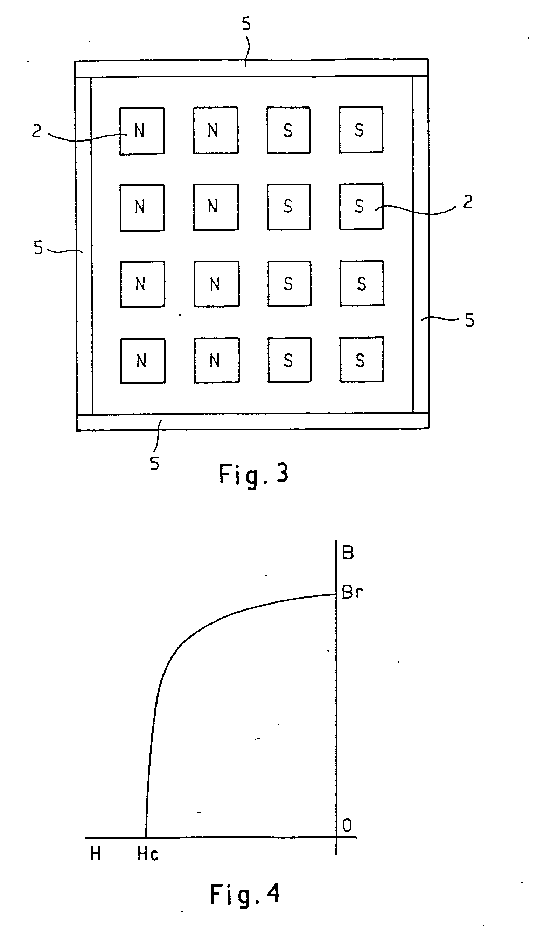

The individual coils 6 can be otherwise connected to one another and/or wound so as to enable pulses of electric current generated by a power supply 10 to pass through them in one direction and, respectively, in the opposite direction, only when the apparatus is being activated, so as to produce an alternate distribution of poles N and S having different polarities on the holding surface 8, as shown in Fig. 1, or a distribution in groups of poles of the same polarity, as shown in the example of Fig. 3, so as to vary the depth of the magnetic field across the workpieces to be anchored. The solution shown in Fig. 1, for example, is suitable for gripping or holding small-sized workpieces and is characterized by a relatively limited field depth, while the pole distribution of Fig. 3 is more suitable for holding larger and thicker workpieces, due to the greater depth of the magnetic field resulting from the greater distance between the poles of the outermost rows. It is obvious however that, starting from the same basic structure of the magnetic apparatus, it is possible to obtain various types of groupings and distributions of N and S polarities, by making the appropriate connections between the magnetizing coils 6.

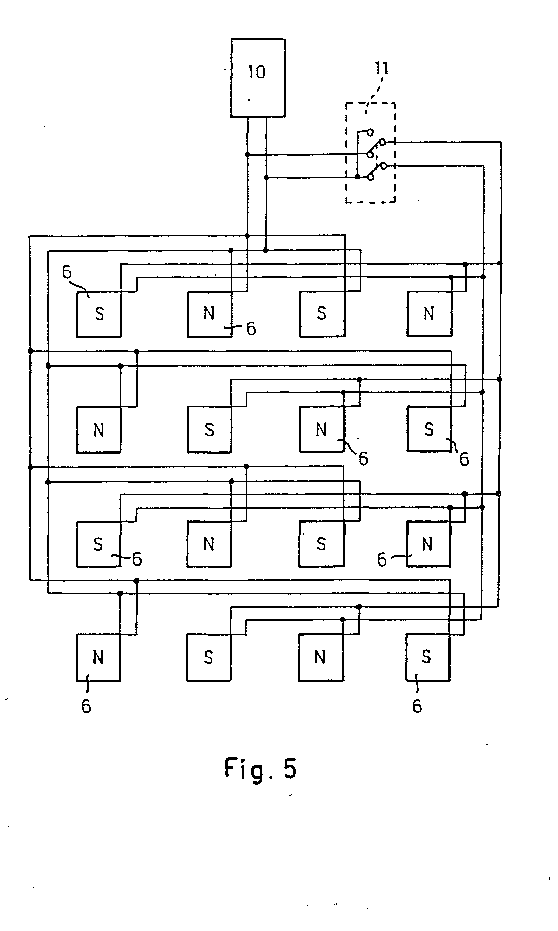

Fig. 5 of the drawing shows an electric circuit for connection of the coils 6 to the power supply 10 by means of a change-over switch 11 to change the polarities from the configuration of Fig. 1 to Fig. 3; the set of coils 6 which must maintain the same polarity N or S are connected directly to the supply 10 while the set of coils 6 that must reverse their polarities N or S are connected to power supply 10 by change-over switch 11, as previously mentioned, therefore, in both solutions of Figs. 1 and 3 there is a first group of coils generating a first polarity N and a second group of coils 6 generating a reverse polarity S.

As mentioned previously, the magnetic apparatus is activated and deactivated by magnetizing and, respectively, completely demagnetizing the individual cores 3 of magnetic material, by making them follow the characteristic magnetizing curve of the type of material used, or progressively decreasing magnetizing loops with alternate polarities, until the apparatus is completely deactivated. Particularly suitable for this use is an oriented cast magnetic material, for example, belonging to the family of magnetic materials based on aluminium, nickel and cobalt, also known by the tradename "Alnico", in particular, magnetic materials having a high magnetic remanence value Br, equal to or higher than 1 Tesla (T) over (10.000 Gauss), and a coercive force value Hc of not more than one-fifth the numerical value of Br, or less than 79580 Ampere/meter (A/m) (1000 Oersted) whose magnetic properties are defined by the typical demagnetization curve represented in the graph in Fig. 4.

In order to establish the best working conditions of the various magnetic circuits and in order to obtain the desired flux intensities on the gripping surface 8, it is advisable for the gaps between adjacent pole pieces 2, defined by spacers 4, to be suitably correlated to the magnetic lengths of the cores 3, measured in the direction of their axes of magnetization. Tests carried out showed that excellent results are obtained by maintaining the width L2 of the gaps between adjacent poles, equal to or less than half the magnetic length L1 of the cores 3, as previously defined. In this way, it is possible to obtain a high concentration of magnetic poles per unit of work surface 8, which cannot be achieved with other known magnetic structures or dispositions, and a high gripping force.

It is evident, therefore, from what has been described and shown, that by using magnets which can be activated and deactivated on command, by magnetization and complete demagnetization, and their coaxial disposition with respect to pole pieces having an identical conformation, it is possible to obtain a symmetrical distribution of the poles, in parallel rows, with extremely close-set poles, and at the same time to change the distribution of the polarities, both during the design and construction of the apparatus, and during use. In this way it is possible to achieve different flux concentrations over the work-holding surface, and a different magnetic field depth adaptable to various work requirements, whilst maintaining comparatively high gripping forces. Due to the extremely high degree of structural and functional simplicity, it is also possible to reduce the pole pitches to a minimum and to reduce the weight and overall height, with consequent advantages for the users who can thus make use of a larger working area on the machine tool.

## Claims

1. A magnetic gripping apparatus comprising an external ferromagnetic yoke having a base plate (1) and lateral walls (5) upstanding therefrom to define a closed peripheral enclosure, pole pieces (2) located within said peripheral enclosure, each pole piece (2) presenting a gripping face towards an external body to be magnetically gripped, said pole piece (2) having a longitudinal axis perpendicular to said base plate (1) and to said gripping face, a plurality of reversible permanent magnets (3) magnetically and axially aligned to said pole pieces (2), and arranged between each pole piece (2) and said base plate (1), said pole pieces (2) being physically arranged in a symmetrical configuration comprised of at least one pattern of four pole pieces (2), representing the corners of a square, and having the same cross-sectional area as the reversible permanent magnets (3), an electric coil (6) surrounding each reversible permanent magnet (3), said coils (6) being connectable to a power supply (10), so as to establish a permanent magnetic polarity within at least half the reversible permanent magnets in selectively either sense, resulting in two magnetic configurations of the reversible permanent magnets, one of which exhibits symmetry about the diagonals of each adjacent square, characterized in that the pole pieces (2) are spaced apart from one another by a gap (L2) equal to or less than half the axial length (L1) of said reversible permanent magnets (3), in that the electric coils are arranged for separate energization in two groups, in that switch means (11) are provided to connect one group of said coils (6) to the power supply (10) to reverse the polarity of the pole pieces (2) located along one diagonal of each adjacent square so as to create a second magnetic configuration in which the polarity of each reversible permanent magnet within each square is the same, and in that the coils of each group can also be energized to demagnetize all reversible permanent magnets.

2. A magnetic gripping apparatus as claimed in claim 1 wherein said polarity distributions include a first polarity distribution in which pole pieces (2) of a first polarity are aligned on a diagonal of said given square while the pole pieces (2) of a second polarity are aligned on the other diagonal of said given square.

3. A magnetic gripping apparatus as claimed in claim 1 wherein said polarity distributions further include a second polarity distribution having pole pieces (2) of the same polarity at the corners of said given square.

4. A magnetic gripping apparatus as claimed in claim 3 wherein said second polarity distribution replaces said first polarity distribution upon activation of said switch means (11).

5. A magnetic gripping apparatus as claimed in claim 4 wherein said first polarity distribution replaces said second polarity distribution upon reactivation of said switch means (11).

**Patentansprüche**

1. Magnetische Haltevorrichtung, enthaltend ein äusseres ferromagnetisches Joch mit einer Basisplatte (1) und Seitenwänden (5), die sich von dieser erstrecken, um ein ringsum geschlossenes, Gehäuse zu bilden, wobei in dem genannten umlaufend geschlossenen Gehäuse Polstücke (2), von denen jedes Polstück (2) ein Haltefläche aufweist, die einem aussenliegenden, magnetisch zu haltenden Körper zugewandt ist, sowie eine rechtwinklig zu der Grundplatte (1) und der genannten Haltefläche angeordnete Längsachse, wobei eine Anzahl von umkehrbaren Dauermagneten (3) magnetisch und axial zu den genannten Polstücken (2) ausgerichtet und zwischen einem jeden Polstück (2) und der genannten Basisplatte (1) angeordnet sind, und wobei die genannten Polstücke (2) physisch in einer symmetrischen Darstellung angeordnet sind, die wenigstens einen Satz von vier Polstücken (2) enthält, welche die Ecken eines Quadrates bilden, und die den gleichen Querschnittbereich wie die umkehrbaren Dauermagneten (3) haben, wobei eine elektrische Windung (6) jeden umkehrbaren Dauermagneten (3) umgibt und die genannten Windungen (6) mit einer Stromzufuhr (1) verbindbar sind, so dass eine dauermagnetische Polarität in wenigstens der Hälfte der umkehrbaren Dauermagneten in wahlweise beiden Richtungen hergestellt wird, die sich aus zwei magnetischen Darstellungen der umkehrbaren Dauermagneten ergeben, von denen sich eine symmetrisch zu den Diagonalen eines jeden angrenzenden Quadrates zeigt, dadurch gekennzeichnet, dass die Polstücke (2) einen Abstand voneinander um eine Lücke (L2), der gleich oder geringer als die Hälfte der axialen Länge (L1) des genannten umkehrbaren Dauermagneten (3) ist, und dadurch, dass die elektrischen Windungen zur Trennung der Stromzufuhr in zwei Gruppen angeordnet sind, und dadurch, dass Schalter (11) vorgesehen sind, um eine Gruppe der genannten Windungen (6) mit der Stromzufuhr (10) zu verbinden und die Polarität der Polstücke (2) umzukehren, die entlang einer Diagonalen eines jeden angrenzenden Quadrates angeordnet sind, so dass eine zweite magnetische Darstellung gebildet wird, in welcher die Polarität eines jeden umkehrbaren Dauermagneten innerhalb eines jeden Quadrates die gleiche ist, und dadurch, dass die Windungen einer jeden Gruppe ebenso gespeist können, um alle umkehrbaren Dauermagneten zu entmagnetisieren.

2. Magnetische Haltevorrichtung nach Patentanspruch 1, dadurch gekennzeichnet, dass die Verteilung der genannten Polarität eine erste Polaritätsverteilung enethält, bei der die Polstücke (2) einer ersten Polarität in einer Diagonalen des genannten vorhandenen Quadrates ausgerichtet sind, während die Polstücke (2) einer zweiten Polarität in der anderen Diagonalen des genannten vorhandenen Quadrates ausgerichtet sind.

3. Magnetische Haltevorrichtung nach Patentanspruch 1, dadurch gekennzeichnet, dass die genannten Polaritätsverteilungen weiter eine zweite Polaritätsverteilung umfasst, die Polstücke (2) der gleichen Polarität an den Ecken des genannten vorhandenen Quadrates hat.

4. Magnetische Haltevorrichtung nach Patentanspruch 3, dadurch gekennzeichnet, dass die genannte zweite Polaritätsverteilung die genannte erste Polaritätsverteilung durch die Aktivierung der genannten Schalter (11) ersetzt.

5. Magnetische Haltevorrichtung nach Patentanspruch 4, dadurch gekennzeichnet, dass die genannte erste Polaritätsverteilung die genannte zweite Polaritätsverteilung durch die Reaktivierung der genannten Schalter (11) ersetzt.

**Revendications**

1. Appareil magnétique d'ancrage du type comprenant une carcasse ferromagnétique externe ayant une plaque de base (1) et des parois latérales (5) en saillie par rapport à cette dernière pour former un boîtier périphérique fermé; des pièces polaires (2) logées dans ledit boîtier périphérique, chaque pièce (2) présentant une surface d'ancrage orientée vers un corps externe à ancrer magnétiquement et ayant un axe longitudinal perpendiculaire à ladite plaque de base (1) et à ladite face d'ancrage; une pluralité d'aimants permanents reversible (3) magnétiquement et axialement alignés avec lesdites pièces polaires (2) et disposés entre chaque pièce polaire (2) et la plaque de base (1), les pièces polaires (2) étant physiquement disposées en une configuration symétrique selon au moins un module de quatre pièces polaires (2) représentant les coins d'un carré et ayant la même section transversale que les aimants permanents réversibles (3); une bobine électrique (6), qui entoure chaque aimant permanent reversible (3), lesdites bobines (6) pouvant être reliées à une source d'énergie (10) de façon à établir une polarité magnétique permanente à l'intérieur de la moitié au moins des aimants reversibles selon sélectivement un sens ou l'autre, ceci donnant lieu à deux configurations magnétiques d'aimants permanents reversibles dont l'une présente une symétrie par rapport aux diagonales de chaque carré adjacent, caractérisé en ce que les pièces polaires (2) sont séparées l'une de l'autre par un intervalle (L2) égal ou au moins à la moitié de la longueur axiale (L1) desdits aimants permanents réversibles (3); en ce que les bobines électriques sont disposées de façon à séparer l'alimentation en deux groupes; en ce que des moyens de commutation (11) sont prévus pour connecter un groupes desdites bobines (6) à la source d'énergie (10) de façon à inverser la polarité des pièces polaires (2) situées sur une diagonale de chaque carré adjacent pour générer une second configuration magnétique dans laquelle la polarité de chaque aimant permanent réversible est la même pour chaque carré; et en ce que les bobines de chaque groupe peuvent également être alimentées pour démagnétiser tous les aimants permanents reversibles.

2. Appareil magnétique d'ancrage selon la revendication 1, caractérisé en ce que les distributions de polarité comprennent une première distribution de polarité dans laquelle les pièces polaires (2) d'une première polarité sont alignées sur une diagonale dudit carré, alors que les pièces polaires (2) d'une seconde polarité sont alignées sur l'autre diagonale de ce carré.

3. Appareil magnétique d'ancrage selon la revendication 1, caractérisé en ce que les distributions de polarité incluent en outre une seconde distribution de polarité ayant des pièces polaires (2) de même polarité aux angles dudit carré.

4. Appareil magnétique d'ancrage selon la revendication 3, caractérisé en ce que ladite seconde distribution de polarité remplace ladite première distribution de polarité par activation desdits moyens de commutation (11).

5. Appareil magnétique d'ancrage selon la revendication 4, caractérisé en ce que ladite première distribution de polarité remplace ladite seconde distribution de polarité par réactivation desdits moyens de commutation (11).

| S | N | S | N | 2 |
|---|---|---|---|---|
| N | S | N | S | |
| S | N | S | N | |
| N | S | N | S | |

5

5

5

5

2

2

**Fig.1**

**Fig.2**

5

2

N   N   S   S

N   N   S   S   2

5

N   N   S   S

5

N   N   S   S

5

Fig. 3

B

Br

0

H   Hc

Fig. 4

Fig. 5